# EUROPEAN PATENT APPLICATION

(11) **EP 4 835 319 A1**
(43) Date of publication of application: **04.11.2026**
(21) Application number: 24909487.1
(22) Date of filing: 08.05.2024
(51) Int. Cl.: F16F 6/00, F16F 15/03, B60G 13/00, F16F 9/00

(54) **SHOCK ABSORBER AND SUSPENSION SYSTEM FOR VEHICLE, AND VEHICLE**

(30) Priority: 29.12.2023 CN 202311870186
(71) Applicant: BYD Company Limited, Shenzhen, Guangdong 518118 (CN)
(72) Inventor: LIAN, Yubo, Shenzhen, Guangdong 518118 (CN); LUO, Hongbin, Shenzhen, Guangdong 518118 (CN); LIAO, Yinsheng, Shenzhen, Guangdong 518118 (CN); SUN, Xianmeng, Shenzhen, Guangdong 518118 (CN); ZHANG, Feng, Shenzhen, Guangdong 518118 (CN); ZHANG, Liang, Shenzhen, Guangdong 518118 (CN); WANG, Qiang, Shenzhen, Guangdong 518118 (CN)
(74) Representative: Mathys & Squire
(86) International application number: PCT/CN2024/091598
(87) International publication number: WO 2025/138520

(57) **Abstract**

A shock absorber (1) for a vehicle, a suspension system, and a vehicle are provided. The shock absorber (1) for a vehicle includes: a magnetic induction apparatus (30), the magnetic induction apparatus (30) having a first induction surface (321); and an induction scale (40), the induction scale (40) having a second induction surface (42), where at least one of the first induction surface (321) and the second induction surface (42) is formed as a circular arc surface.

## Description

### CROSS-REFERENCE TO RELATED APPLICATIONS

This application is based on Chinese Patent Application No. 202311870186.1, filed on December 29, 2023, and claims priority to the Chinese Patent Application, which is incorporated herein by reference in its entirety.

### TECHNICAL FIELD

This application relates to the technical field of shock absorbers, and specifically, to a shock absorber for a vehicle and a vehicle having the shock absorber for a vehicle.

### BACKGROUND

A shock absorber in related technologies is provided with a grating sensor and a grating guide rail therein. The grating guide rail is a plane. The grating sensor emits an optical signal and receives a signal reflected from the grating guide rail, so that a position of the grating sensor relative to the grating guide rail can be determined. However, when the grating sensor and the grating guide rail rotate relative to each other, the signal emitted by the grating sensor is not perpendicular to the grating guide rail. Therefore, the grating guide rail cannot receive the signal reflected back from the grating sensor, which consequently results in signal failure, and disables the grating sensor to determine its position relative to the grating guide rail.

### SUMMARY

This application is intended to resolve at least one of technical problems existing in the related technologies. To this end, this application proposes a shock absorber for a vehicle. In the shock absorber for a vehicle, at least one of a first induction surface and a second induction surface is formed as a circular arc surface, which ensures that induction can be maintained even when the first induction surface and the second induction surface rotate relative to each other, thereby improving stability of induction between the first induction surface and the second induction surface.

This application further proposes a suspension system and a vehicle having the shock absorber.

A shock absorber for a vehicle according to an embodiment of a first aspect of this application. The shock absorber includes: a magnetic induction apparatus, the magnetic induction apparatus having a first induction surface; and an induction scale, the induction scale having a second induction surface, wherein at least one of the first induction surface and the second induction surface is formed as a circular arc surface.

In the shock absorber for a vehicle according to this embodiment of this application, at least one of the first induction surface and the second induction surface is formed as the circular arc surface, which ensures that induction can be maintained even when the first induction surface and the second induction surface rotate relative to each other, thereby improving stability of induction between the first induction surface and the second induction surface.

In addition, the shock absorber for a vehicle according to the foregoing embodiment of this application may further have the following additional technical features.

According to some embodiments of this application, in a first direction, the induction scale has different magnetic field strengths at different positions, wherein the first induction surface corresponds to the second induction surface to induce magnetic fields at the different positions of the induction scale.

According to some optional embodiments of this application, a central axis of the circular arc surface extends in the first direction.

According to some embodiments of this application, both the first induction surface and the second induction surface are formed as circular arc surfaces, and the first induction surface and the second induction surface are disposed in parallel.

According to some embodiments of this application, the shock absorber includes: a first fitting member, wherein the first fitting member includes a first magnetic member; and a second fitting member, wherein the second fitting member includes a second magnetic member, the first magnetic member and the second magnetic member are disposed opposite to each other and magnetically engage with each other such that the first fitting member and the second fitting member move toward or away from each other in the first direction, the magnetic induction apparatus is fixed to one of the first fitting member and the second fitting member, and the induction scale is fixed to the other of the first fitting member and the second fitting member.

According to some optional embodiments of this application, the first magnetic member is a wound coil, and the second magnetic member is a permanent magnet.

According to some optional embodiments of this application, the induction scale and the second magnetic member are spaced apart in the first direction on the second fitting member.

In some embodiments, the magnetic induction apparatus includes a mounting portion and an induction head, the mounting portion is mounted to the first fitting member, the induction head has the second induction surface, and the induction head is disposed at an end of the mounting portion that is away from the first magnetic member.

In some examples, the mounting portion includes: a connecting end, wherein the connecting end is fixed to an end portion of the first fitting member; and a connecting rod, wherein the connecting rod extends in the first direction, one end of the connecting rod is connected to the connecting end, and the other end is connected to the induction head.

According to some optional embodiments of this application, the second fitting member further includes a housing portion, wherein the housing portion defines a movement cavity, the second magnetic member is fixed to an inner wall of the movement cavity, the first magnetic member is movably disposed in the movement cavity, and a buffer portion is disposed on an inner bottom wall of the movement cavity.

In some embodiments, the first fitting member further includes a connecting shaft, the first magnetic member is sleeved on the connecting shaft, the connecting shaft is provided with a sliding portion, the housing portion is provided with a sliding fitting portion, and the sliding fitting portion fits with the sliding portion to guide a movement direction of the housing portion.

In some examples, one of the sliding portion and the sliding fitting portion is formed as a chute, and the other is formed as a sliding rail.

In some examples, the connecting shaft includes a surrounding plate and a support plate, wherein the support plate is located at one end of the surrounding plate, the first magnetic member is sleeved on the surrounding plate, and an end portion of the first magnetic member abuts against the support plate.

Further, the magnetic induction apparatus is fixed to a side of the support plate that is away from the surrounding plate.

According to some embodiments of this application, the magnetic induction apparatus is a Hall sensor.

According to an embodiment of a second aspect of this application, a suspension system is proposed. The suspension system includes the shock absorber according to the embodiment of the first aspect of this application.

In the suspension system according to this embodiment of this application, the shock absorber according to the embodiment of the first aspect of this application is used, and at least one of the first induction surface and the second induction surface is formed as the circular arc surface, so that induction can be maintained even when the first induction surface and the second induction surface rotate relative to each other, thereby facilitating improvement of induction stability between the first induction surface and the second induction surface.

According to some embodiments of this application, the suspension system further includes a lower wishbone and an axle, wherein the lower wishbone is separately connected to the shock absorber and the axle; and the lower wishbone defines a vacant cavity, and the vacant cavity is configured to accommodate the magnetic induction apparatus or the induction scale.

According to an embodiment of a third aspect of this application, a vehicle is proposed. The vehicle includes the suspension system according to the embodiment of the second aspect of this application.

In the vehicle according to this embodiment of this application, the suspension system according to the embodiment of the second aspect of this application is used, and at least one of the first induction surface and the second induction surface is formed as the circular arc surface, so that induction can be maintained even when the first induction surface and the second induction surface rotate relative to each other, thereby facilitating improvement of induction stability between the first induction surface and the second induction surface.

Additional aspects and advantages of this application are set forth in part in the following description, and in part become apparent from the following description, or may be learned through the practice of this application.

### BRIEF DESCRIPTION OF DRAWINGS

The foregoing and/or additional aspects and advantages of this application will become apparent and readily understood from the description of embodiments taken in conjunction with the following accompanying drawings, in which:
FIG. 1 is a diagram of a structure of a suspension system according to an embodiment of this application;
FIG. 2 is a cross-sectional view of a suspension system according to an embodiment of this application;
FIG. 3 is an enlarged view of portion A in FIG. 2;
FIG. 4 is a cross-sectional view of a suspension system according to an embodiment of this application;
FIG. 5 is an enlarged view of portion B in FIG. 4;
FIG. 6 is a cross-sectional view of a suspension system according to an embodiment of this application;
FIG. 7 is an enlarged view of portion C in FIG. 6;
FIG. 8 is a top view of a partial structure of a suspension system according to an embodiment of this application;
FIG. 9 is an enlarged view of portion D in FIG. 8; and
FIG. 10 is a diagram of a structure of a magnetic induction apparatus according to an embodiment of this application.

### Reference numerals: shock absorber 1,

first fitting member 10, connecting shaft 11, surrounding plate 111, support plate 112, chute 113, first magnetic member 12,
second fitting member 20, housing portion 21, movement cavity 211, second magnetic member 22,
magnetic induction apparatus 30, mounting portion 31, connecting end 311, fixing hole 3111, connecting rod 312, induction head 32, first induction surface 321,
induction scale 40, second induction surface 42,
buffer portion 50, vacant hole 51,
suspension system 6, lower wishbone 60, vacant cavity 61.

### DESCRIPTION OF EMBODIMENTS

Embodiments of this application are described in detail below, examples of which are shown in the accompanying drawings, where same or similar reference numerals throughout represent same or similar elements or elements having same or similar functions. The embodiments described below with reference to the accompanying drawings are exemplary and are merely used to explain this application, and shall not be construed as a limitation on this application.

A shock absorber 1 for a vehicle according to an embodiment of this application is described below with reference to the accompanying drawings.

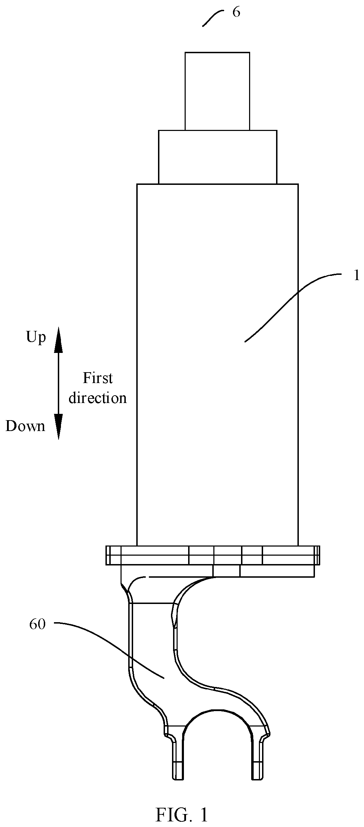

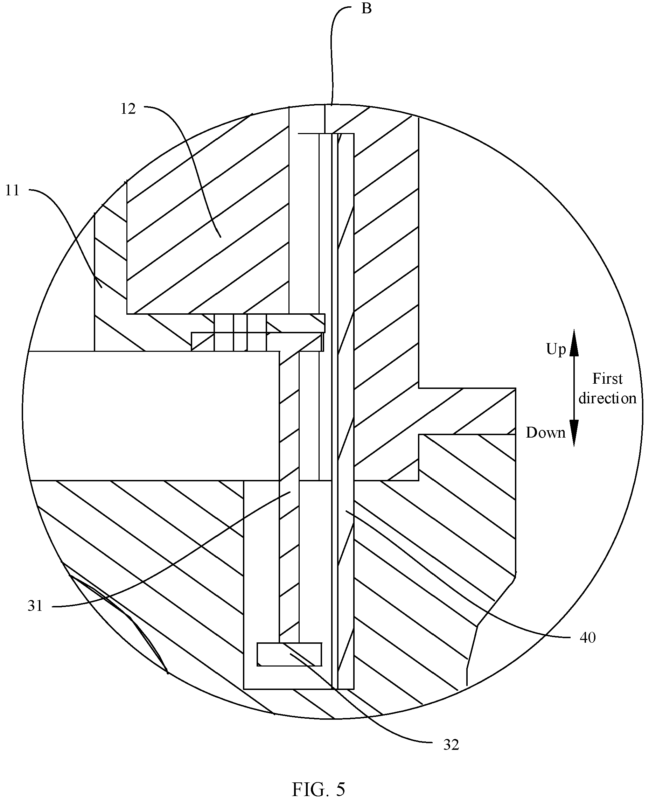

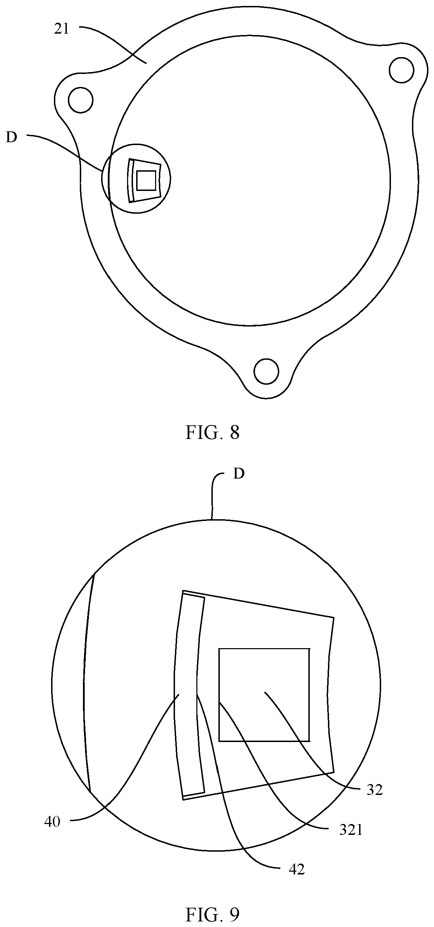

As shown in FIG. 1 to FIG. 10, a shock absorber 1 for a vehicle according to an embodiment of this application includes a magnetic induction apparatus 30 and an induction scale 40.

The magnetic induction apparatus 30 has a first induction surface 321. The induction scale 40 has a second induction surface 42. At least one of the first induction surface 321 and the second induction surface 42 is formed as a circular arc surface, to avoid induction failure between the first induction surface 321 and the second induction surface 42 when the first induction surface 321 and the second induction surface 42 rotate relative to each other, thereby ensuring that the first induction surface 321 can stably induce magnetic field strengths at different positions on the induction scale 40.

Specifically, when the vehicle turns or tilts, the second induction surface 42 on the induction scale 40 rotates relative to the first induction surface 321 of the magnetic induction apparatus 30. Therefore, forming at least one of the first induction surface 321 and the second induction surface 42 as the circular arc surface enables the first induction surface 321 to still accurately induce the magnetic field strengths at the different positions on the induction scale 40 even when the first induction surface 321 and the second induction surface 42 rotate relative to each other, thereby avoiding misalignment between the first induction surface 321 and the second induction surface 42, and avoiding induction failure between the first induction surface 321 and the second induction surface 42.

Therefore, in the shock absorber 1 for a vehicle according to this embodiment of this application, at least one of the first induction surface 321 and the second induction surface 42 is formed as the circular arc surface, which ensures that induction can be maintained even when the first induction surface 321 and the second induction surface 42 rotate relative to each other, thereby improving stability of induction between the first induction surface 321 and the second induction surface 42.

A shock absorber 1 for a vehicle according to a specific embodiment of this application is described below with reference to the accompanying drawings.

As shown in FIG. 1 to FIG. 10, a shock absorber 1 for a vehicle according to an embodiment of this application includes a magnetic induction apparatus 30 and an induction scale 40.

In some embodiments of this application, in the first direction, the induction scale 40 has different magnetic field strengths at different positions. The first induction surface 321 corresponds to the second induction surface 42 to induce magnetic fields at different positions of the induction scale 40. That is, a position of the first induction surface 321 relative to the induction scale 40 can be determined by using the magnetic induction apparatus 30 to induce the magnetic field strengths at different positions of the induction scale 40.

Specifically, when the shock absorber 1 is applied to a vehicle, and the vehicle vibrates, the magnetic induction apparatus 30 and the induction scale 40 move relative to each other in the first direction. In this case, the induction scale 40 moves relative to the magnetic induction apparatus 30, and the position of the induction scale 40 induced by the magnetic induction apparatus 30 is changed. By determining the magnetic field strength induced by the magnetic induction apparatus 30, a relative movement distance between the magnetic induction apparatus 30 and the induction scale 40 that occurs in the first direction can be determined. Consequently, an amplitude of vehicle vibration can be determined, and the vehicle vibration is then fed back to the shock absorber 1, so that the shock absorber 1 can adaptively and adequately buffer the vehicle vibration, thereby improving comfort of occupants in the vehicle.

In addition, when contaminants such as oil stains and dust exist on the induction scale 40, because the magnetic induction apparatus 30 induces a magnetic field strength on the induction scale 40, the contaminants such as oil stains and dust do not affect the magnetic field strength of the induction scale 40, so that the magnetic induction apparatus 30 can accurately and smoothly induce the magnetic field strength on the induction scale 40, thereby facilitating accurate analysis of the relative movement distance between the magnetic induction apparatus 30 and the induction scale 40.

In some embodiments of this application, a central axis of the circular arc surface extends in the first direction, so that when the magnetic induction apparatus 30 and the induction scale 40 move relative to each other in the first direction, the first induction surface 321 can consistently accurately induce magnetic field strengths at different positions on the induction scale 40, to avoid induction failure between the first induction surface 321 and the second induction surface 42 when the first induction surface 321 and the second induction surface 42 move relative to each other in the first direction.

In some embodiments of this application, the induction scale 40 is made of different magnetic materials, the induction scale 40 is made by using magnetic materials of different specifications and sizes, or the induction scale 40 is magnetized in different magnetization directions, so that magnetic field strengths at different positions of the induction scale 40 are different.

In some embodiments of this application, both the first induction surface 321 and the second induction surface 42 are formed as circular arc surfaces, and the first induction surface 321 and the second induction surface 42 are disposed in parallel, so that when the first induction surface 321 rotates relative to the second induction surface 42, a shortest distance between the first induction surface 321 and the second induction surface 42 remains unchanged, which facilitates reducing an error generated when the first induction surface 321 induces the magnetic field strength on the second induction surface 42. Consequently, the first induction surface 321 can accurately induce a magnetic field strength on the second induction surface 42, a relative position between the first induction surface 321 and the induction scale 40 can be accurately determined, and a relative movement distance between the first induction surface 321 and the induction scale 40 that occurs in the first direction can be accurately determined when the vehicle vibrates.

In some embodiments, centers of the first induction surface 321 and the second induction surface 42 coincide. When the first induction surface 321 and the second induction surface 42 rotate relative to each other, the second induction surface 42 rotates relative to the first induction surface 321 around the center, to avoid mutual interference between the first induction surface 321 and the second induction surface 42, while ensuring that the shortest distance between the first induction surface 321 and the second induction surface 42 remains unchanged.

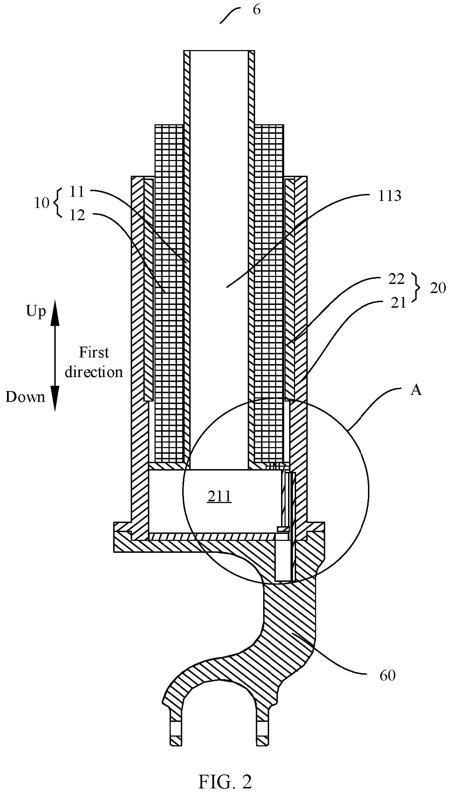

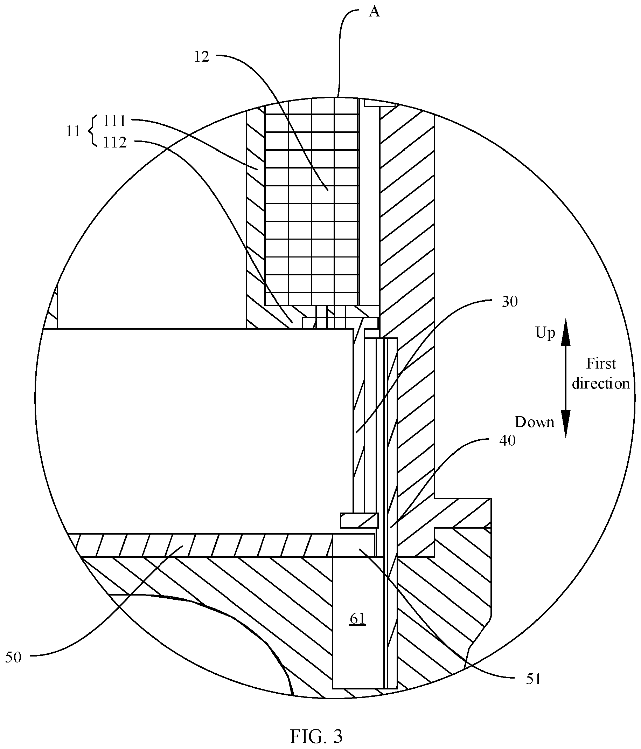

In some embodiments, as shown in FIG. 2 and FIG. 3, the first direction extends in an up-down direction, the induction scale 40 extends in the up-down direction, and magnetic field strengths at different positions in the up-down direction on the induction scale 40 is different. When the induction scale 40 moves in the up-down direction relative to the first induction surface 321, and the first induction surface 321 moves in the up-down direction to positions at different heights of the induction scale 40, magnetic field strengths that can be induced by the first induction surface 321 are different.

By analyzing magnetic field strengths induced by the magnetic induction apparatus 30 at two positions, a distance that the induction scale 40 moves relative to the magnetic induction apparatus 30 can be determined, a distance that the induction scale 40 moves relative to the first induction surface 321 in the up-down direction can then be determined, and a magnitude of the vehicle vibration in the up-down direction can be determined.

In some examples, a magnetic field strength at the same height of the induction scale 40 is the same. Further, when the first induction surface 321 rotates relative to the induction scale 40, the magnetic field strength induced by the first induction surface 321 remains unchanged, to avoid that when the first induction surface 321 rotates relative to the induction scale 40, the distance that the first induction surface 321 moves relative to the second induction surface 42 cannot be determined by analyzing the magnetic field strength induced by the magnetic induction apparatus 30.

In some embodiments of this application, as shown in FIG. 2, the shock absorber 1 includes a first fitting member 10 and a second fitting member 20. The first fitting member 10 includes a first magnetic member 12. The second fitting member 20 includes a second magnetic member 22. The first magnetic member 12 and the second magnetic member 22 are disposed opposite to each other. The first magnetic member 12 and the second magnetic member 22 magnetically engage with each other such that the first fitting member 10 and the second fitting member 20 move toward or away from each other in the first direction. The magnetic induction apparatus 30 is fixed to one of the first fitting member 10 and the second fitting member 20, and the induction scale 40 is fixed to the other of the first fitting member 10 and the second fitting member 20.

When the vehicle vibrates, when the first fitting member 10 and the second fitting member 20 move toward or away from each other in the first direction. Under driving of the first fitting member 10 and the second fitting member 20, the magnetic induction apparatus 30 and the induction scale 40 move toward or away from each other in the first direction. In this case, the first induction surface 321 on the magnetic induction apparatus 30 moves in the first direction relative to the position of the induction scale 40, and the magnetic field strength induced by the magnetic induction apparatus 30 is changed, so that a relative movement distance between the magnetic induction apparatus 30 and the induction scale 40 can be determined, and then an amplitude of the vehicle vibration can be determined.

Under the action of the first magnetic member 12 and the second magnetic member 22, there is a damping force between the first fitting member 10 and the second fitting member 20, to drive the first fitting member 10 and the second fitting member 20 to move toward or away from each other in a direction opposite to the vehicle vibration, so as to buffer the vehicle vibration. Moreover, when the first fitting member 10 and the second fitting member 20 move toward or away from each other in the direction opposite to the vehicle vibration, the first fitting member 10 and the second fitting member 20 drive the magnetic induction apparatus 30 and the induction scale 40 to move in the first direction. In this case, the magnetic field strength on the induction scale 40 induced by the magnetic induction apparatus 30 is changed, so that a damping situation of the shock absorber 1 can be fed back in time.

In some embodiments, the vehicle includes a vehicle body and an axle. When the shock absorption member 1 is applied to the vehicle, the first fitting member 10 is connected to the vehicle body, and the second fitting member 20 is connected to the axle. When the vehicle drives on a road, wheels vibrate in the first direction due to an uneven road surface. In this case, the wheels drive, through the axle, the second fitting member 20 to move in the first direction relative to the first fitting member 10. In this case, the induction scale 40 moves in the first direction relative to the magnetic induction apparatus 30. By determining magnetic field strengths at different positions on the induction scale 40 that are measured by the magnetic induction apparatus 30, a position of the first induction surface 321 relative to the induction scale 40 can be determined, and then a distance that the second fitting member 20 moves in the first direction relative to the first fitting member 10 can be determined.

For example, when the first fitting member 10 and the second fitting member 20 move opposite to or away from each other in the first direction, the magnetic induction apparatus 30 moves from a first position to a second position relative to the induction scale 40. By recording a magnetic field strength induced by the magnetic induction apparatus 30 at the first position and recording a magnetic induction strength induced by the magnetic induction apparatus 30 at the second position, and analyzing the magnetic field strengths at the two positions induced by the magnetic induction apparatus 30, a distance that the magnetic induction apparatus 30 moves relative to the induction scale 40 can be determined.

By determining the distance that the magnetic induction apparatus 30 moves relative to the induction scale 40, the distance that the second fitting member 20 moves relative to the first fitting member 10 can be determined. Consequently, an amplitude of axle vibration can be analyzed to determine a degree of engagement between the first magnetic member 12 and the second magnetic member 22 based on the axle vibration, and to determine a magnitude of a force output by the shock absorber 1. The vehicle vibration is then fed back to the shock absorber 1, so that the shock absorber 1 can adaptively and fully buffer axle vibration and further adaptively and fully buffer wheel vibration, to effectively reduce vibration transferred from the wheels to the vehicle body, thereby improving comfort of occupants in the vehicle.

When an amplitude of vibration experienced by the wheels is relatively large, a distance that the wheels drive the second fitting member 20 through the axle to move relative to the first fitting member 10 is relatively large. When an amplitude of vibration experienced by the wheel is relatively small, a distance that the wheels drive the second fitting member 20 through the axle to move relative to the first fitting member 10 is relatively small. Based on a distance that the second fitting member 20 moves in the first direction relative to the first fitting member 10, a magnitude of a magnetic force between the first magnetic member 12 and the second magnetic member 22 is determined, that is, a damping force between the first fitting member 10 and the second fitting member 20 is determined. Consequently, the second fitting member 20 can move in a direction opposite to a direction of the axle vibration, to counteract the axle vibration, and tires of the vehicle can bring into contact with the ground as closely as possible, which can attenuate the wheel vibration and reduce vibration transferred from the wheels to the vehicle body, thereby improving the comfort of the occupants.

In some optional embodiments of this application, the first magnetic member 12 is a wound coil, and the second magnetic member 22 is a permanent magnet. This arrangement reduces winding difficulty, and facilitates energization of the wound coil.

Specifically, because the second fitting member 20 is connected to the axle, and the first fitting member 10 is connected to the vehicle body, when the vehicle encounters an uneven road surface, wheel vibration is transferred to the second fitting member 20 through the axle. By configuring the first magnetic member 12 as the wound coil, and configuring the second magnetic member 22 as the permanent magnet, when the wheels vibrate, the wheels drive the permanent magnet on the second fitting member 20 to vibrate rather than directly driving the wound coil on the first fitting member 10 to vibrate. In this way, when the wound coil is energized, reduction of a length of a power supply line is facilitated. In addition, the power supply line is prevented from being pulled, and thus prevented from being worn, which can ensure stable power supply from the power supply line to the wound coil, and improve operation stability of the shock absorber 1.

In some optional embodiments of this application, as shown in FIG. 2 and FIG. 3, the induction scale 40 and the second magnetic member 22 are spaced apart in the first direction on the second fitting member 20, so that a specific distance is kept between the second magnetic member 22 and the induction scale 40 in the first direction, and a magnetic field on the induction scale 40 is prevented from being affected by a magnetic field on the second magnetic member 22. Consequently, the first induction surface 321 can accurately induce magnetic field strengths at different positions on the induction scale 40 without being affected by the second magnetic member 22. The magnetic field strength induced by the first induction surface 321 has a deviation, which affects determination of a distance that the second fitting member 20 moves relative to the first fitting member 10.

In some embodiments, the first direction extends in the up-down direction, and the second magnetic member 22 and the induction scale 40 are spaced apart in the up-down direction, to avoid mutual influence between the magnetic field on the second magnetic member 22 and the magnetic field on the induction scale 40.

In some specific embodiments of this application, the magnetic induction apparatus 30 includes a mounting portion 31 and an induction head 32. The mounting portion 31 is mounted to the first fitting member 10. The induction head 32 has the second induction surface 42. The induction head 32 is disposed at an end of the mounting portion 31 that is away from the first magnetic member 12, so that when the induction head 32 induces a magnetic field strength at a corresponding position on the induction scale 40, a region on the induction scale 40 that is induced by the induction head 32 can be away from the first magnetic member 12, thereby avoiding mutual influence between the magnetic fields of the first magnetic member 12 and the induced region on the induction scale 40. Consequently, the first induction surface 321 can accurately induce magnetic field strengths at different positions on the induction scale 40, without being affected by the first magnetic member 12. The magnetic field strength induced by the first induction surface 321 has a deviation, which affects determination of a distance that the second fitting member 20 moves relative to the first fitting member 10.

In some embodiments, as shown in FIG. 2, FIG. 3, and FIG. 10, the first direction extends in the up-down direction. The mounting portion 31 is disposed at a lower end of the first fitting member 10. The induction head 32 is disposed at a lower end of the first magnetic member 12. The first induction surface 321 on the induction head 32 can induce a magnetic field strength on the induction scale 40 corresponding to a level of the first induction surface 321, so that configuring the induction head 32 and the first magnetic member 12 to be spaced apart in the up-down direction enables the first magnetic member 12 and an induced region on the induction scale 40 to be spaced apart in the up-down direction, thereby avoiding mutual influence of the first magnetic member 12 and the induction scale 40.

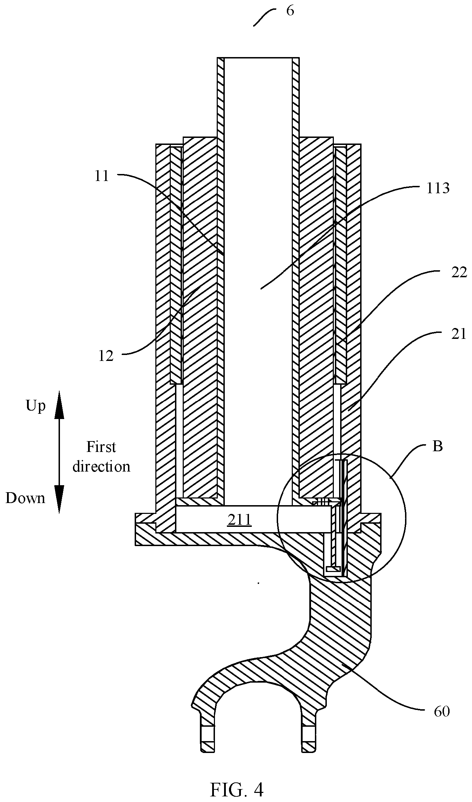

As shown in FIG. 2 and FIG. 4, when the second fitting member 20 moves upward relative to the first fitting member 10, the second magnetic member 22 on the second fitting member 20 and the induction scale 40 move upward relative to the first fitting member 10. In this case, the induction scale 40 moves in a direction toward the first magnetic member 12. In this case, the induction head 32 on the magnetic induction apparatus 30 can induce a magnetic field strength of a lower region of the induction scale 40. Because there is a specific distance between the induction head 32 and the first magnetic member 12, there is also a specific distance between the first magnetic member 12 and the region on the induction scale 40 that is induced by the magnetic induction apparatus 30, thereby preventing the first magnetic member 12 from affecting the magnetic field strength of the lower region of the induction scale 40.

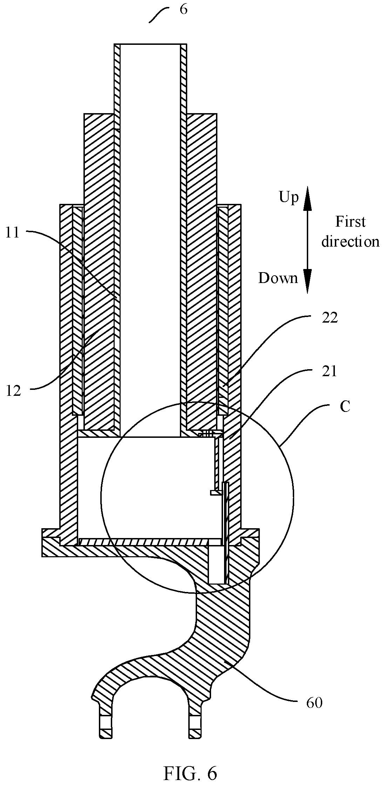

As shown in FIG. 2 and FIG. 6, when the second fitting member 20 moves downward relative to the first fitting member 10, the second magnetic member 22 on the second fitting member 20 and the induction scale 40 move downward relative to the first fitting member 10. In this case, the induction scale 40 moves in a direction away from the first magnetic member 12, and the induction head 32 on the magnetic induction apparatus 30 can induce a magnetic field strength of an upper region of the induction scale 40. In this case, there is a long distance between the induction scale 40 and the first magnetic member 12, thereby preventing the first magnetic member 12 from affecting the magnetic field strength of the upper region of the induction scale 40.

In some examples, a coercive force of the first magnetic member 12 is less than that of the induction scale 40, which avoids close proximity of the induction scale 40 to the first magnetic member 12. For example, when the lower region of the induction scale 40 faces the upper region of the first magnetic member 12, the first magnetic member 12 magnetizes the induction scale 40, which prevents the first magnetic member 12 from changing the magnetic field strength on the induction scale 40, affects determination of the induction head 32 on the magnetic field strength on the induction scale 40, and affects determination on the distance that the second fitting member 20 moves relative to the first fitting member 10.

In some specific embodiments, the first magnetic member 12 is a wound coil, a coercive force of the first magnetic member 12 is determined by a magnitude of a current, a winding way, or the like. The induction scale 40 is a permanent magnet. By setting the coercive force of the first magnetic member 12 to be less than that of the induction scale 40, the first magnetic member 12 is prevented from magnetizing the induction scale 40, and the first magnetic member 12 is prevented from changing the magnetic field strength on the induction scale 40.

In addition, because the first magnetic member 12 is the wound coil, the induction scale 40 does not magnetize the first magnetic member 12. Although the coercive force of the first magnetic member 12 is less than that of the induction scale 40, the induction scale 40 does not change the magnetic field strength of the first magnetic member 12, an acting force between the first magnetic member 12 and the second magnetic member 22 is prevented from being affected, and damping effect of the shock absorber 1 is prevented from being affected.

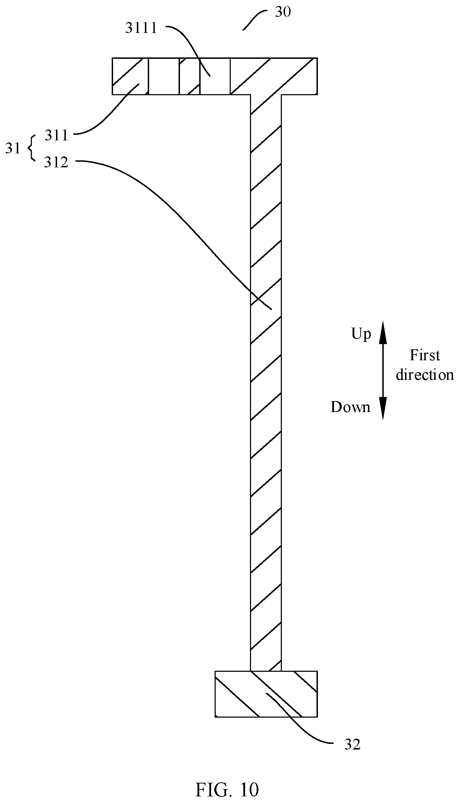

In some specific embodiments of this application, as shown in FIG. 10, the mounting portion 31 includes a connecting end 311 and a connecting rod 312. The connecting end 311 is fixed to an end portion of the first fitting member 10. The connecting rod 312 extends in the first direction. One end of the connecting rod 312 is connected to the connecting end 311, and the other end is connected to the induction head 32, so that the induction head 32 is disposed at an end of the mounting portion 31 that is away from the first magnetic member 12. Consequently, the first magnetic member 12 and the induction head 32 are kept relatively stationary, a specific distance is kept between the induction head 32 and the first magnetic member 12, and the first magnetic member 12 is prevented from affecting the magnetic field strength of a portion on the induction scale 40 that is induced by the induction head 32.

In some embodiments, as shown in FIG. 10, the connecting end 311 is provided with a plurality of fixing holes 3111. A fastener may pass through the fixing hole 3111 to fit with an end portion of the first fitting member 10, to fix the connecting end 311 to the end portion of the first fitting member 10. Consequently, the magnetic induction apparatus 30 is fixed to the end portion of the first fitting member 10, so that when the second fitting member 20 moves in the first direction relative to the first fitting member 10, the induction scale 40 can move in the first direction relative to the induction head 32, and therefore, the induction head 32 can induce magnetic field strengths at different positions on the induction scale 40. By analyzing the different magnetic field strengths induced by the induction head 32, a distance that the second fitting member 20 moves in the first direction relative to the first fitting member 10 can be determined.

In some optional embodiments of this application, as shown in FIG. 2, the second fitting member 20 further includes a housing portion 21. The housing portion 21 defines a movement cavity 211. The second magnetic member 22 is fixed to an inner wall of the movement cavity 211. The first magnetic member 12 is movably disposed in the movement cavity 211. A direction of movement of the second magnetic member 22 relative to the first magnetic member 12 can be limited by the movement cavity 211, and then a direction of movement of the second fitting member 20 relative to the first fitting member 10 can be limited. A relative movement between the first fitting member 10 and the second fitting member 20 is utilized to buffer vehicle vibration, and then buffer wheel vibration, to reduce vibration transferred from the wheels to the vehicle body, thereby improving the comfort of the occupants in the vehicle.

A buffer portion 50 is disposed on an inner bottom wall of the movement cavity 211. When the first magnetic member 12 moves in the movement cavity 211 and the first magnetic member 12 moves to the bottom of the movement cavity 211, the buffer portion 50 can buffer an impact force exerted on the first magnetic member 12, which prevents the first magnetic member 12 from directly impacting the bottom of the movement cavity 211 when the first magnetic member 12 moves in the movement cavity 211, thereby avoiding a collision between the first magnetic member 12 and the housing portion 21.

In some specific embodiments of this application, as shown in FIG. 2, the first fitting member 10 further includes a connecting shaft 11. The first magnetic member 12 is sleeved on the connecting shaft 11. The connecting shaft 11 is provided with a sliding portion. The housing portion 21 is provided with a sliding fitting portion. The sliding fitting portion fits with the sliding portion to guide a movement direction of the housing portion 21, so that the housing portion 21 can smoothly slide in the first direction relative to the connecting shaft 11.

Specifically, when the housing portion 21 slides in the first direction relative to the connecting shaft 11, the second fitting member 20 can drive the induction scale 40 to slide relative to the magnetic induction apparatus 30 in the first direction. Further, when the second fitting member 20 moves in the first direction relative to the second fitting member 20 due to an acting force from the axle, the magnetic induction apparatus 30 can induce a magnetic field strength at a corresponding position on the induction scale 40. By analyzing the magnetic field strength induced by the magnetic induction apparatus 30, an amplitude of vibration of the second fitting member 20 relative to the first fitting member 10 can be determined, and an amplitude of axle vibration can be determined. Based on the amplitude of the axle vibration, a magnetic force between the first fitting member 10 and the second fitting member 20 can be determined. The second fitting member 20 can move in a direction opposite to the axle vibration, to buffer the vehicle vibration, thereby reducing vibration transferred to the vehicle body, and improving the comfort of the occupants.

In some embodiments, one of the sliding portion and the sliding fitting portion is formed as a chute 113, and the other is formed as a sliding rail. The sliding rail is in sliding fit with the chute 113 to limit a sliding direction of the housing portion 21 relative to the connecting shaft 11, and to further limit a sliding direction of the second fitting member 20 relative to the first fitting member 10.

In some examples, as shown in FIG. 2, the housing portion 21 is provided with a sliding rail (not shown in the figure). The sliding rail extends in the first direction. A chute 113 is disposed in the connecting shaft 11. The chute 113 extends in the first direction. The sliding rail extends into the chute 113. When the second fitting member 20 is subjected to an acting force from the axle and the second fitting member 20 moves relative to the first fitting member 10, the sliding rail moves in the first direction relative to the chute 113, to limit a movement direction of the second fitting member 20.

In some embodiments, as shown in FIG. 3, the connecting shaft 11 includes a surrounding plate 111 and a support plate 112. The support plate 112 is located at one end of the surrounding plate 111. The first magnetic member 12 is sleeved on the surrounding plate 111. An end portion of the first magnetic member 12 abuts against the support plate 112, to limit a position of the first magnetic member 12 by using the support plate 112 and the surrounding plate 111, thereby preventing the first magnetic member 12 from falling off the first fitting member 10.

In some examples, as shown in FIG. 2 and FIG. 3, the surrounding plate 111 extends in the up-down direction. The surrounding plate 111 is formed in a circular ring shape on a projection in the up-down direction. The support plate 112 is disposed below the surrounding plate 111. The support plate 112 extends in a horizontal direction. The first magnetic member 12 is sleeved on the surrounding plate 111. A lower end of the first magnetic member 12 abuts against and fits with the support plate 112. This arrangement utilizes the support plate 112 and the surrounding plate 111 to limit a position of the first magnetic member 12 in the up-down direction, thereby preventing the first magnetic member 12 from falling off the first fitting member 10. Here, it will be understood that the above-mentioned direction limitation is only for ease of description of the accompanying drawings, and does not limit an actual position and direction of the shock absorber 1 used in the vehicle.

In some specific embodiments, as shown in FIG. 3, the magnetic induction apparatus 30 is fixed to a side of the support plate 112 that is away from the surrounding plate 111, so that the magnetic induction apparatus 30 is disposed as far as possible from the first magnetic member 12, so that the first induction surface 321 is disposed away from the first magnetic member 12, to prevent the first magnetic member 12 from affecting a magnetic field of a region on the second induction surface 42 that is induced by the first induction surface 321, thereby preventing affecting induction of the magnetic field strength on the second induction surface 42 by the first induction surface 321. Consequently, this facilitates subsequent analysis of different magnetic field strengths induced by the first induction surface 321, determination of a distance that the first induction surface 321 moves relative to the second induction surface 42, and, in turn, determination of a distance that the second fitting member 20 moves relative to the first fitting member 10.

In some embodiments of this application, the magnetic induction apparatus 30 is a Hall sensor. The Hall sensor is a magnetic field sensor manufactured based on Hall effect. When the second fitting member 20 moves relative to the first fitting member 10, the Hall sensor is capable of inducing a magnetic field strength at a corresponding region on the induction scale 40.

A suspension system 6 according to an embodiment of this application is described below. A suspension system 6 according to an embodiment of this application includes the shock absorber 1 according to the foregoing embodiment of this application.

In the suspension system 6 according to this embodiment of this application, the shock absorber 1 according to the foregoing embodiment of this application is utilized, and at least one of the first induction surface 321 and the second induction surface 42 is formed as the circular arc surface, so that induction can be maintained when the first induction surface 321 and the second induction surface 42 rotate relative to each other, thereby facilitating improvement of induction stability between the first induction surface 321 and the second induction surface 42 is improved.

In some embodiments of this application, as shown in FIG. 1 to FIG. 3, the suspension system 6 further includes a lower wishbone 60 and an axle. The lower wishbone 60 is separately connected to the shock absorber 1 and the axle. The lower wishbone 60 defines a vacant cavity 61. The vacant cavity 61 is configured to accommodate the magnetic induction apparatus 30 or the induction scale 40. When the magnetic induction apparatus 30 and the induction scale 40 move relative to each other in the first direction, the lower wishbone 60 can reserve space for movement of the magnetic induction apparatus 30 or the induction scale 40, which facilitates reducing the space reserved by the shock absorber 1 for the magnetic induction apparatus 30 or the induction scale 40, and facilitates a miniaturization design of the shock absorber 1.

In some embodiments, the shock absorber 1 includes a first fitting member 10 and a second fitting member 20. The magnetic induction apparatus 30 is fixed to one of the first fitting member 10 and the second fitting member 20. The induction scale 40 is fixed to the other of the first fitting member 10 and the second fitting member 20.

In Example 1, as shown in FIG. 2 and FIG. 3, the second fitting member 20 defines a movement cavity 211. The first fitting member 10 is disposed in the movement cavity 211. The magnetic induction apparatus 30 is disposed on the first fitting member 10. The induction scale 40 is disposed on the second fitting member 20. At least a portion of the induction scale 40 is located in the vacant cavity 61. When the second fitting member 20 moves in the up-down direction under an acting force from the axle, the first fitting member 10 moves in the movement cavity 211. In this case, the magnetic induction apparatus 30 moves in the movement cavity 211.

Specifically, the magnetic induction apparatus 30 is disposed below the first fitting member 10. The vacant cavity 61 is disposed below the movement cavity 211. By providing the vacant cavity 61 on the lower wishbone 60, when the first fitting member 10 moves in the up-down direction in the movement cavity 211, the magnetic induction apparatus 30 can move in the up-down direction in the movement cavity 211 and the vacant cavity 61. This arrangement facilitates reducing space occupied by the magnetic induction apparatus 30 in the movement cavity 211, and further facilitates a miniaturization design of the movement cavity 211, thereby facilitating implementing a miniaturization design of the shock absorber 1.

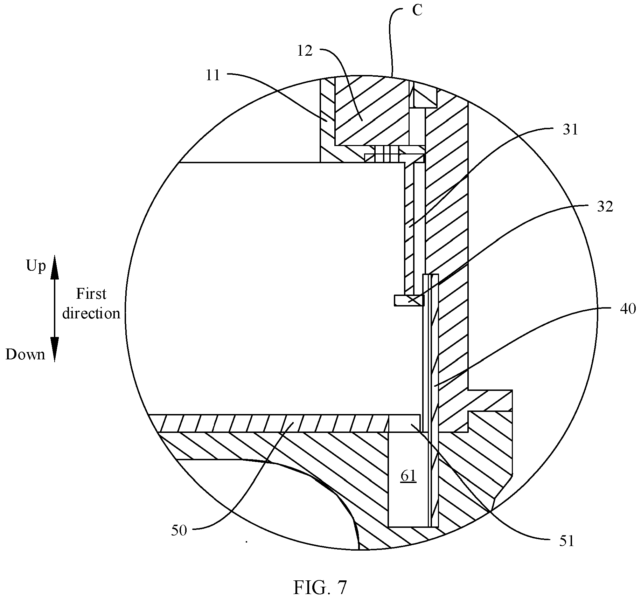

In some examples, as shown in FIG. 7, a buffer portion 50 is disposed at the bottom of the movement cavity 211. The buffer portion 50 is provided with a vacant hole 51. The vacant hole 51 is located above the vacant cavity 61. When the first fitting member 10 moves to a lower portion of the movement cavity 211, the buffer portion 50 can buffer a collision between the first fitting member 10 and the second fitting member 20. In this case, the magnetic induction apparatus 30 can enter the vacant cavity 61 from the vacant hole 51.

In Example 2, the second fitting member 20 defines a movement cavity 211. The first fitting member 10 is disposed in the movement cavity 211. The induction scale 40 is disposed on the first fitting member 10. The magnetic induction apparatus 30 is disposed on the second fitting member 20. When the second fitting member 20 moves in the up-down direction under an acting force from the axle, the first fitting member 10 moves in the movement cavity 211. In this case, the induction scale 40 moves in the movement cavity 211.

Specifically, the induction scale 40 is disposed below the first fitting member 10. The vacant cavity 61 is disposed below the movement cavity 211. By providing the vacant cavity 61 on the lower wishbone 60, when the first fitting member 10 moves in the up-down direction in the movement cavity 211, the induction scale 40 can move in the up-down direction in the movement cavity 211 and the vacant cavity 61. This arrangement facilitates reducing space occupied by the induction scale 40 in the movement cavity 211, and further facilitates a miniaturization design of the movement cavity 211, thereby facilitating implementation of a miniaturization design of the shock absorber 1.

In Example 3, the first fitting member 10 is disposed outside the second fitting member 20. For example, the first fitting member 10 is sleeved on the second fitting member 20. The magnetic induction apparatus 30 is disposed at a lower end of the first fitting member 10. The induction scale 40 is disposed at a lower end of the second fitting member 20. At least a portion of the induction scale 40 is located in the vacant cavity 61. The first fitting member 10 moves relative to the second fitting member 20 and the lower wishbone 60 in the up-down direction when the second fitting member 20 moves in the up-down direction under an acting force from the axle. The vacant cavity 61 can accommodate movement of the magnetic induction apparatus 30, so that no additional space needs to be reserved for the movement of the magnetic induction apparatus 30 during mounting of the suspension system 6.

In Example 4, the first fitting member 10 is disposed outside the second fitting member 20. For example, the first fitting member 10 is sleeved on the second fitting member 20. The induction scale 40 is disposed at a lower end of the first fitting member 10. The magnetic induction apparatus 30 is disposed at a lower end of the second fitting member 20. When the second fitting member 20 moves in the up-down direction under an acting force from the axle, the first fitting member 10 moves in the up-down direction relative to the second fitting member 20 and the lower wishbone 60. The vacant cavity 61 can accommodate movement of the induction scale 40, so that no additional space needs to be reserved for the movement of the induction scale 40 during mounting of the suspension system 6.

A vehicle according to an embodiment of this application is described below. A vehicle according to an embodiment of this application includes the shock absorber 1 for a vehicle according to the foregoing embodiment of this application.

In the vehicle according to this embodiment of this application, the suspension system 6 according to the foregoing embodiment of this application is utilized, and at least one of the first induction surface 321 and the second induction surface 42 is formed as the circular arc surface, so that induction can be maintained when the first induction surface 321 and the second induction surface 42 rotate relative to each other, thereby facilitating improvement of induction stability between the first induction surface 321 and the second induction surface 42 is improved.

Other configurations and operations of the vehicle according to the embodiments of this application are known to persons of ordinary skill in the art and will not be described in detail here.

In the description of this application, it will be understood that orientations or positional relationships indicated by the terms "center", "longitudinal", "transverse", "length", "width", "thickness", "upper", "lower", "vertical", "horizontal", "top", "bottom", "inner", "outer", "clockwise", "anticlockwise", "axial", "radial", "circumferential", and the like are orientations or positional relationships as shown in the accompanying drawings, and are only for the purpose of facilitating and simplifying the descriptions of this application instead of indicating or implying that apparatuses or elements indicated must have particular orientations, and be constructed and operated in the particular orientations, so that these terms are not construed as limiting this application. In addition, a feature limited by "first" and "second" may explicitly or implicitly include one or more features. In the description of this application, unless otherwise stated, "a plurality of" means two or more. In description of this application, the first feature beings "above" or "below" the second feature may include that the first feature is in direct contact with the second feature, or may include that the first feature and second feature are not in direct contact but are in contact via another feature between them.

In the description of this application, the first feature being "over", "above", or "on" the second feature may include that the first feature is directly above or diagonally above the second feature, or simply means that the first feature has a higher horizontal height than the second feature.

In the description of this application, unless otherwise expressly specified and limited, the terms "mount", "connect", "link", and the like will be understood in a broad sense, such as, a fixed connection, a detachable connection, or an integral connection; a mechanical connection, or an electrical connection; or a direct connection, an indirect connection through an intermediate medium, or an internal connection of two elements. For persons of ordinary skill in the art, the specific meanings of the foregoing terms in this application will be understood according to specific situations.

In the description of this specification, descriptions referring to the terms "one embodiment", "some embodiments", "exemplary embodiments", "examples", "specific examples", or "some examples" mean that specific features, structures, materials, or characteristics described in connection with this embodiment or example are included in at least one embodiment or example of this application. In this specification, the schematic representations of the foregoing terms are not necessarily aimed at the same embodiment or example. Furthermore, specific features, structures, materials or characteristics described may be combined in any one or more embodiments or examples in a suitable manner.

Although the embodiments of this application have been shown and described, persons of ordinary skill in the art can understand that many changes, modifications, substitutions and variations can be made to these embodiments without departing from the principles and purposes of this application, and the scope of this application is defined by the claims and their equivalents.

## Claims

1. A shock absorber for a vehicle, wherein the shock absorber comprises:
a magnetic induction apparatus, the magnetic induction apparatus having a first induction surface; and
an induction scale, the induction scale having a second induction surface,
wherein at least one of the first induction surface and the second induction surface is formed as a circular arc surface.

2. The shock absorber for a vehicle according to claim 1, wherein in a first direction, the induction scale has different magnetic field strengths at different positions, and wherein the first induction surface corresponds to the second induction surface to induce magnetic fields at the different positions of the induction scale.

3. The shock absorber for a vehicle according to claim 2, wherein a central axis of the circular arc surface extends in the first direction.

4. The shock absorber for a vehicle according to any one of claims 1 to 3, wherein both the first induction surface and the second induction surface are formed as circular arc surfaces, and the first induction surface and the second induction surface are disposed in parallel.

5. The shock absorber for a vehicle according to any one of claims 1 to 4, wherein the shock absorber comprises:
a first fitting member, the first fitting member comprising a first magnetic member; and
a second fitting member, the second fitting member comprising a second magnetic member, the first magnetic member and the second magnetic member being disposed opposite to each other and magnetically engage with each other such that the first fitting member and the second fitting member move toward or away from each other in the first direction,
the magnetic induction apparatus being fixed to one of the first fitting member and the second fitting member, and the induction scale being fixed to the other of the first fitting member and the second fitting member.

6. The shock absorber for a vehicle according to claim 5, wherein the first magnetic member is a wound coil, and the second magnetic member is a permanent magnet.

7. The shock absorber for a vehicle according to claim 5 or 6, wherein the induction scale and the second magnetic member are spaced apart in the first direction on the second fitting member.

8. The shock absorber for a vehicle according to claim 7, wherein the magnetic induction apparatus comprises a mounting portion and an induction head, the mounting portion is mounted to the first fitting member, the induction head has the second induction surface, and the induction head is disposed at an end of the mounting portion that is away from the first magnetic member.

9. The shock absorber for a vehicle according to claim 8, wherein the mounting portion comprises:
a connecting end, the connecting end being fixed to an end portion of the first fitting member; and
a connecting rod, the connecting rod extending in the first direction, one end of the connecting rod being connected to the connecting end, and the other end being connected to the induction head.

10. The shock absorber for a vehicle according to any one of claims 5 to 9, wherein the second fitting member further comprises a housing portion, the housing portion defines a movement cavity, the second magnetic member is fixed to an inner wall of the movement cavity, the first magnetic member is movably disposed in the movement cavity, and a buffer portion is disposed on an inner bottom wall of the movement cavity.

11. The shock absorber for a vehicle according to claim 10, wherein the first fitting member further comprises a connecting shaft, the first magnetic member is sleeved on the connecting shaft, the connecting shaft is provided with a sliding portion, the housing portion is provided with a sliding fitting portion, and the sliding fitting portion fits with the sliding portion to guide a movement direction of the housing portion.

12. The shock absorber for a vehicle according to claim 11, wherein one of the sliding portion and the sliding fitting portion is formed as a chute and the other is formed as a sliding rail.

13. The shock absorber for a vehicle according to claim 11 or 12, wherein the connecting shaft comprises a surrounding plate and a support plate, the support plate is located at one end of the surrounding plate, the first magnetic member is sleeved on the surrounding plate, and an end portion of the first magnetic member abuts against the support plate.

14. The shock absorber for a vehicle according to claim 13, wherein the magnetic induction apparatus is fixed to a side of the support plate that is away from the surrounding plate.

15. The shock absorber for a vehicle according to any one of claims 1 to 14, wherein the magnetic induction apparatus is a Hall sensor.

16. A suspension system, wherein the suspension system comprises the shock absorber for a vehicle according to any one of claims 1 to 15.

17. The suspension system according to claim 16, wherein the suspension system further comprises a lower wishbone and an axle, and the lower wishbone is separately connected to the shock absorber and the axle; and
the lower wishbone defines a vacant cavity, and the vacant cavity is configured to accommodate the magnetic induction apparatus or the induction scale.

18. A vehicle, wherein the vehicle comprises the suspension apparatus according to claim 16 or 17.
